# EUROPEAN PATENT SPECIFICATION

(11) **EP 3 330 747 B1**
(45) Date of publication and mention of the grant of the patent: **07.08.2019**
(21) Application number: 17204810.0
(22) Date of filing: 30.11.2017
(51) Int. Cl.: G01W 1/10, G01W 1/00

(54) **APPARATUS, METHOD, AND COMPUTER PROGRAM PRODUCT FOR PROVIDING A METOCEAN FORECAST**
VORRICHTUNG, METHODE UND COMPUTERPROGRAMMPRODUKT ZUR BEREITSTELLUNG EINER METOCEAN-VORHERSAGE
APPAREIL, MÉTHODE ET PRODUIT LOGICIEL PERMETTANT DE FOURNIR UNE PRÉVISION METOCEAN

(30) Priority: 30.11.2016 EP 16201572
(43) Date of publication of application: 06.06.2018
(73) Proprietor: Offshore Navigation Limited, 2640 George Hill (AI)
(72) Inventor: DOKKEN, Sverre, 3071 Limassol (CY); ERIKSSON, Leif, SE-412 96 Gothenburg (SE); LEMMENS, Kris, 3071 Limassol (CY); JONASSON, Lars, SE-412 96 Gothenburg (SE)
(74) Representative: Patentship Patentanwaltsgesellschaft mbH

(56) References cited:
- US-A1- 2004 143 396
- US-A1- 2008 255 760

## Description

The invention relates to an oceanographic forecast, in particular to providing an apparatus for providing a weather forecast, a method for providing a weather forecast model and a computer program product.

Maritime weather forecasts are useful for vessels, in particular ships, yachts or floating platforms to plan their route and to calculate their fuel consumption. Those weather predictions can be obtained from different weather prediction models.

Those weather forecast models have uncertainties in weather prediction and/or ocean prediction. Those uncertainties are usually minimized by improving the underlying physics in the numerical weather prediction models. Another method for decreasing the uncertainties is to decrease the temporal and/or spatial extent of the weather forecast.

Most production centers for weather forecast models are specialized in certain regions, for example a coastline of a country, an environment of a city or a specific area on sea. For example, a global forecast may cover the complete globe, but at a coarse resolution and with a high forecast uncertainty. Therefore, a user of weather predictions has difficulties in knowing which forecast to utilize for the best possible result in a certain region.

Document US 2004/0143396 A1 shows a method of generating short-, medium-range and seasonal-timescale weather or climate forecasts by running an ensemble of computer models on a distributed computing system or

US 2008/0255760 A1 discloses a method of forecasting parameters related to industrial processes, in which outputs of different models are combined to form a weighted mean.

It is therefore an objective of the invention to present an improved concept for providing a weather forecast.

This objective is achieved by the features of the independent claims. Further embodiments are described in the dependent claims, the description as well as in the figures.

The invention is based on the finding that a weather prediction can be provided in an advantageous way by weighting different weather forecasts from different sources and combining them into a combined forecast parameter. Such an improved combined weather forecast parameter may be used in a ship planning and/or weather routing systems of ships.

According to a first aspect of the invention, the objective is solved by an apparatus for providing a weather forecast. The apparatus comprises an interface that is configured to receive a first forecast parameter of a first weather forecast model, to receive a second forecast parameter of a second weather forecast model different from the first weather forecast model and to receive measured reference data related to the first forecast parameter and the second forecast parameter. The apparatus further comprises a processor that is configured to assign a first weight factor to the first forecast parameter based on a comparison of the first forecast parameter with the measured reference data. The processor is configured to assign a second weight factor to the second forecast parameter based on a comparison of the second forecast parameter with the measured reference data and to combine the first forecast parameter and the second forecast parameter based on the first weight factor and the second weight factor to obtain a combined forecast parameter. The interface is configured to output the combined forecast parameter as a weather forecast.

In the described context, the weather forecast is a value that indicates a sea state including weather. In particular weather in this context comprises climatology, meteorological and/or oceanic parameters. The weather parameters comprise metocean parameters. For example the weather forecast indicates a wind speed and/or a wave height. The weather forecast may comprise a vector comprising a plurality of parameters that describe the weather. The reference data may use a plurality of data sources, in particular raw data sources, wherein the plurality of sources include in general more sources than a single weather model uses for its weather prediction.

The interface may be a data network interface, for transmitting and/or receiving data wirelessly or over cable.

The processor may be a CPU of a computer system. The processor may also be a microcontroller. The processor may also be a virtual computer system running on a server or a plurality of servers.

The first forecast parameter and/or the second forecast parameter comprise data related to at least one geophysical parameter of a weather forecast. For example, a forecast parameter describes an ocean current speed or an ocean current direction or an absolute wave height or a significant wave height or a wave period or a wave direction or a wind speed or a wind direction or a wave spectrum comprising wind-generated waves and/or swell waves.

The first forecast parameter and/or the second forecast parameter may also comprise two or more of these geophysical parameters, for example as a forecast parameter vector. The forecast parameters describe a weather forecast, i.e. a weather prediction. The first forecast parameter and the second forecast parameter therefore describe a possible weather in the future. The apparatus may be configured to receive a plurality of weather forecast parameters from a plurality of weather forecast models.

The measured reference data relate to the forecast parameters and describe a weather in the past. For example, the first forecast parameter and the second forecast parameter describe an ocean current for the next day while the measured reference data describes an ocean current that was measured in the past or the very recent past, i.e. a nowcast.

The measured reference data may comprise remote sensing data from satellite imagery and data, for example with a resolution of about 1000 square kilometers, airborne data, for example with a higher accuracy but a resolution of about 100 square kilometers, costal station data, for example with an even higher accuracy but a resolution of about 10 square kilometers, and in-situ data from floating sensors, including buoys, gliders, drifters, external ships, for example with an even higher accuracy and a resolution of about meters. Moreover, sensors on board of the ship measure the weather prediction as to determine geophysical parameters to check the differences between the measured reference data and/or the model data, for example from climatology data, meteorological data, oceanic data and/or metocean data. The check may be performed automatically by machines, later to eventually be utilized by machine learning.

By assigning weight factors to the forecast parameters, the apparatus can influence the forecast parameters utilized and therefore combine the forecast parameters in an advantageous way. The resulting combined forecast parameter therefore indicates the same type of forecast parameter and the same type of weather aspect as related to the first forecast parameter and also to the second forecast parameter, but may have an improved prediction accuracy. Using multiple forecasts from multiple sources and combining them in an optimal way based on a validation and comparison of the weather forecast services with reference data provides a weather forecast with an increased accuracy. The sources may comprise global, regional and/or local forecast models.

The weather forecast may comprise a forecast in time for a fixed space but also a distance forecast for a future location and a fixed time of a moving vessel. For example, the weather forecast may predict a weather for a space of a shipping route of a vessel for 12 days but also predicts a weather forecast for a space, the ship will reach in 12 days.

The determination of the combined forecast parameter is dependent on the weight factors and may be performed by machine learning, in particular unsupervised machine learning in which the processor compares model data and measured reference data with historical data repetitively and therefore determines values during several repetitions that lead to a decreasing forecast error. In this unsupervised machine learning process all available sources are used to provide an optimal combined forecast parameter. This may comprise high-intensity computing intervals for the processor.

In another kind of machine learning, in particular supervised machine learning, boundary conditions, geophysical relations and constraints may be given to the processor to decrease the computing intensity and/or to improve the outcome. In particular, those kind of parameters are given to the processor that have a low variation, for example ocean current directions that are not changing noticeably in a space of several kilometers. This kind of machine learning determining the combined forecast parameter is faster and requires less intensive computing.

In an embodiment the processor is configured to assign the weight factors on the basis of a skill score indicating the quality of the first forecast parameter and/or the second forecast parameter and/or the measured reference data.

The skill score may be a predetermined value that indicates the quality of the forecast parameters and especially the quality of the source of the forecast parameters. The skill score therefore indicates the quality of the first weather forecast model or the second weather forecast model. For example, original weather data as a first forecast model may get a less score than weather data produced by a weather forecast model of another weather prediction service. The skill score may also indicate the quality of the measured reference data.

In an embodiment the processor is configured to assign the weight factors on the basis of an error estimate indicating the mismatch between a measured weather parameter and the first forecast parameter or the second forecast parameter, respectively.

The error estimate indicates the quality of the forecast itself. In particular, the error estimate describes a difference between a forecast parameter value and a measured reference data value.

In an embodiment the processor is configured to determine the mismatch on the basis of at least one of the following parameters: an ocean current speed or an ocean current direction or an absolute wave height or a significant wave height or a wave direction or a wave period or a wind speed or a wind direction or a wave spectrum comprising wind-generated waves and/or swell waves, sea ice concentration, sea ice drift, sea ice edge, sea surface temperature, sea surface salinity.

The named parameters characterize a maritime weather and therefore are particularly useful forecast parameters.

In an embodiment the processor is configured to obtain the combined forecast parameter in predetermined time intervals, in particular after receiving new first forecast parameters and/or new second forecast parameters and/or new measured reference data; and/or the processor is configured to determine the first weight factor and/or the second weight factor in predetermined time intervals.

Obtaining the combined forecast parameter in time intervals keeps a combined forecast parameter actual. Weather is always changing and may be dependent from several factors like climate or geographical variations. Therefore, the weight factors can be redefined in predetermined time intervals, in particular every season or month or day or hour or minute.

In an embodiment the processor is configured to adapt the received first forecast parameter and/or the received second forecast parameter and/or the received measured reference data to a common data format, in particular relating recording time, recording location, file format and/or naming.

To combine the first and second forecast parameters and for weighting the forecast parameters, it is useful to bring the parameters to a common format.

In an embodiment the processor is configured to obtain the combined forecast parameter by creating a statistical value based on the weighted first forecast parameter and the weighted second forecast parameter, in particular a first order statistics value or a second order statistics value. The statistical value may be a median value.

A weighted statistical value is a value that takes into account which of the first forecast parameter or the second forecast parameter is more relevant for the weather forecast.

In an embodiment the processor is configured to determine the weight factors dependent of a capturing method hierarchically, in particular dependent of in-situ observation of weather parameters and remote sensing weather parameters, wherein the processor is configured to prioritize the in-situ observation parameters over the remote sensing weather parameters; or in particular dependent of in-situ observation of weather parameters and weather forecast parameters, wherein the processor is configured to prioritize the in-situ observation parameters over the weather forecast parameters; or in particular dependent of remote sensing weather parameters and weather forecast parameters, wherein the processor is configured to prioritize the remote sensing parameters over the weather forecast parameters for any identical or similar time interval and/or distance interval and/or area interval.

A hierarchy of capturing methods indicates the anticipated quality of the capturing methods and if those values can be trusted. Especially the age of the captured weather data and the distance of the source of the captured weather data to the vessel that is using the weather forecast is indicating the quality of the capturing method. For example, in situ observations, like from buoys, or ships, have a high ranking in the hierarchy and may be prioritized. On the other hand, remote sensing weather parameters, like from long-range remote observations or weather models do not show the accuracy of in-situ observations. These parameters may be given a weight factor that has a lower hierarchy as a weight factor compared to the in-situ observations.

In an embodiment the reference data comprises observational data, in particular satellite data and/or airborne data and/or in-situ data from coastal stations and/or in-situ data from buoys and/or in-situ data from gliders and/or in-situ data from external ships; and/or the first weather forecast model and the second weather forecast model are based on model data, wherein the model data comprises in particular climatology data and/or seasonal forecast data and/or long term forecast data and/or short term forecast data.

Observational data is data that is anticipated to have higher confidence, therefore these data may be used as reference data.

In an embodiment the processor is configured to waive the first forecast parameter or the second forecast parameter if the weight factor between the two parameters differs for more than a predetermined value, wherein the forecast parameter with the lower weight factor is waived.

The predetermined value, in particular predetermined threshold value, may be defined and/or adapted by the processor or another machine. Therefore the predetermined value is based on unsupervised or supervised machine learning and is automatically adapting to increase the accuracy of the combined forecast parameter.

If one of the forecast parameters was given a weight factor that differs from the other forecast parameter, in particular differs for more than a predetermined value, this forecast parameter may be waived. This means that the forecast parameter that is waived is not taken into account. Therefore, the combined weather forecast may consist of only one forecast parameter of one of the forecast models.

In an embodiment the predetermined value is based on machine learning and the processor is configured to determine the predetermined value by iterative execution of the comparison of the first forecast parameter with the measured reference data and/or by iterative execution of the comparison of the second forecast parameter with the measured reference data.

Determining predetermined value, in particular a predetermined threshold value, of the weight factor by the processor ensures actual values and therefore an increase of confidence of the combined forecast parameter.

In an embodiment the processor is configured to weight the forecast parameters in a way that the lowest mismatch between the combined forecast parameter and the reference data is given.

In a weight assigning, the weight factors to the forecast parameters may be assigned incrementally to see if the mismatch between the combined forecast parameter and the reference data can be minimized. This allows the creation of a weather forecast model that provides weather forecast with a very low mismatch between the formerly observed reference data and the combined forecast parameter.

In one embodiment the processor is configured to select the latest weather parameter from the reference data or to select the weather parameter from the reference data that was measured in a closest distance and/or time to a vessel that utilizes the combined forecast parameter.

Weather parameters may come from so-called pilot charts or climate charts. The pilot charts combine the latest or weightable climate data from different producing climate observations; the climate charts from climate protections, seasonal forecasts and/or reanalysis data. For example, the latest weather parameters for climate data may come from CMIMS, NUA, ECMWF, DWD, CORDC. One data set may be an RAAS5, IRA5, IRA-interim or the like.

Climate charts comprise for example three levels of parameters. Basic parameters comprise classic atmospheric and oceanic parameters like wind, waves, currents, sea surface temperature, air temperature, barometric pressure, precipitation, salinity or the like. Advanced parameters are parameters resulting from the above atmospheric and oceanic conditions like sea ice (limit line, thickness), icebergs (limit line), tropical storms (frequency and location of hurricane, cyclone, typhoon), extreme events (extreme waves, extreme precipitation, extreme tides). A third parameter are operational parameters which are not available in classic analogue pilot charts. These parameters are mostly derived from the above-described parameter levels, the basic parameters and advanced parameters, via combinations or the use of algorithms. They may comprise load line zones, cargo safety, sailing economy map, sailing economy cost, sailing economy emission, route availability, indicator for specialized or weather sensitive operations, ship structural fatigue, maintenance, bio-fouling, etc.

In the digital climate charts, these loads of parameters may be available on the three times scales. A first time scale is a current climatology derived from observations over the past weather and gives a realistic estimation of what atmospheric and oceanic conditions to expect on average each month for the coming year. A second time scale is climatological predictions. These comprise climate models that are used to estimate long-term changes in the climate for the upcoming years and gives the probability of having certain changes of the atmospheric and oceanic conditions compared to "normal/today" climatology in those year. A third time scale is a seasonal prediction that comprises current atmospheric and oceanic conditions. These are taken into account to predict short-term variability of the climate patterns up to six months ahead and gives probabilities and quantities per month or quarter for how much climate parameters will deviate from "normal" climatology.

Climatological models provide weather trends and projections. They base on weather data from about the last 30 years. They provide average values and probabilities of weather events. Seasonal forecast models provide weather predictions that relate to corrected climatological models and nowcasts and therefore provide weather forecasts that show an increased accuracy for the next season. Long term weather forecasts relate to a time interval of months or weeks wherein short term weather forecasts relate to days up to about 14 days.

These climate charts may be used by the processor to select the latest parameters from the reference data. The processor may also combine raw weather information, for example from a satellite, to create these climate charts itself.

These climate charts and seasonal forecasts may be used in sail planning for voyages with a duration longer then the long term weather forecasts.

The objective is solved according to a second aspect by a method for providing a weather forecast. The method comprises:
providing a first forecast parameter of a first weather forecast model;
providing a second forecast parameter of a second weather forecast model different from the first weather forecast model; and
providing measured reference data related to the first forecast parameter and the second forecast parameter;
assigning a first weight factor to the first forecast parameter based on a comparison of the first forecast parameter with the measured reference data;
assigning a second weight factor to the second forecast parameter based on a comparison of the second forecast parameter with the measured reference data;
combining the first forecast parameter and the second forecast parameter based on the first weight factor and the second weight factor to obtain a combined forecast parameter; and
outputting the combined forecast parameter as a weather forecast.

According to a third aspect of the invention, the objective is solved by a computer program product with a program code to execute the above-described method when the program code is being executed on a computer system.

The invention concept is now described, by way of example, with reference to the accompanying drawings, in which:
- Fig. 1: shows a schematic diagram of an apparatus according to an embodiment of the invention;
- Fig. 2: shows an arrangement of several weather data sensors;
- Fig. 3: shows a schematic flow diagram of a method according to an embodiment of the invention; and
- Fig. 4: shows another schematic flow diagram of a method according to an embodiment of the invention.

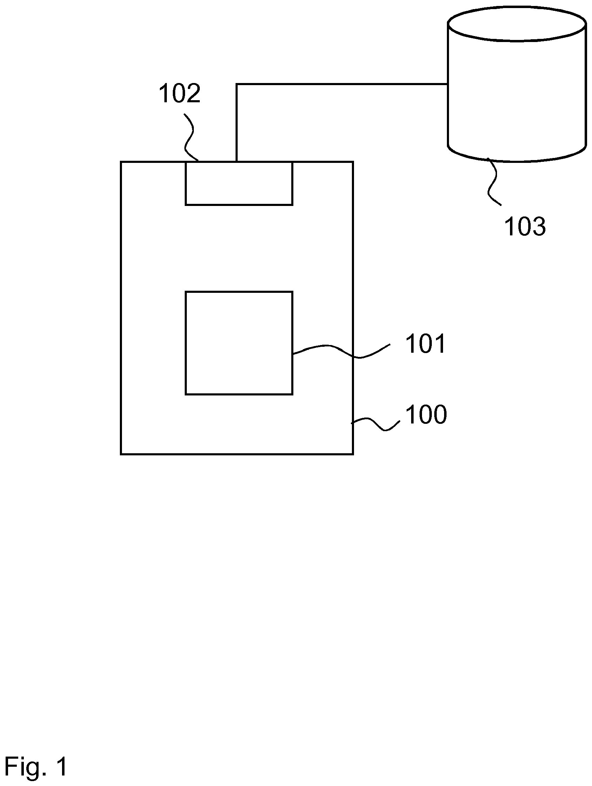

Fig. 1 shows an apparatus 100. The apparatus 100 is be embedded into a computer system of a maritime vessel, in particular a ship, a yacht or a floating platform. In another embodiment the apparatus 100 is a server computer system and is in communication with a computer system of a ship. In another embodiment the apparatus 100 is a computer system on shore.

The apparatus 100 comprises a processor 101. The processor 101 is a CPU. In another embodiment, the processor 101 is a microcontroller unit, a GPU or a combination thereof with a CPU and/or may comprise further devices like an internal memory.

The apparatus 100 comprises an interface 102. The interface 102 is a radio interface that is configured to transmit and/or to receive a radio transmission. The interface 102 further comprises a wired connection to a memory 103. In another embodiment, the connection between the interface 102 and the memory 103 is wireless. In another embodiment, the memory 103 is additionally or alternatively arranged in the apparatus 100.

The memory 103 is allocated on board of a vessel. In another embodiment, the memory 103 is not allocated on board of the vessel. In one embodiment the memory comprises an online storage, for example a cloud storage. The online storage may also comprise storage on servers from a company.

The interface 102 is configured to receive a first forecast parameter of a first weather forecast model. The interface 102 is further configured to receive a second forecast parameter of a second weather forecast model, different from the first weather forecast model. The interface 102 receives the first and/or the second forecast parameter from the memory 103. In other embodiments the interface 102 receives the first and/or the second forecast parameter from another source like a server of a weather forecast provider.

The interface 102 is further configured to receive measured reference data related to the first forecast parameter and the second forecast parameter. In particular, the received measured reference data describes the same geophysical parameter as the first forecast parameter and/or the second forecast parameter. The measured reference data are stored in the memory 103. In another embodiment, the measured reference data are measured live or sent to the interface 102 from another computers system or are read out of another memory.

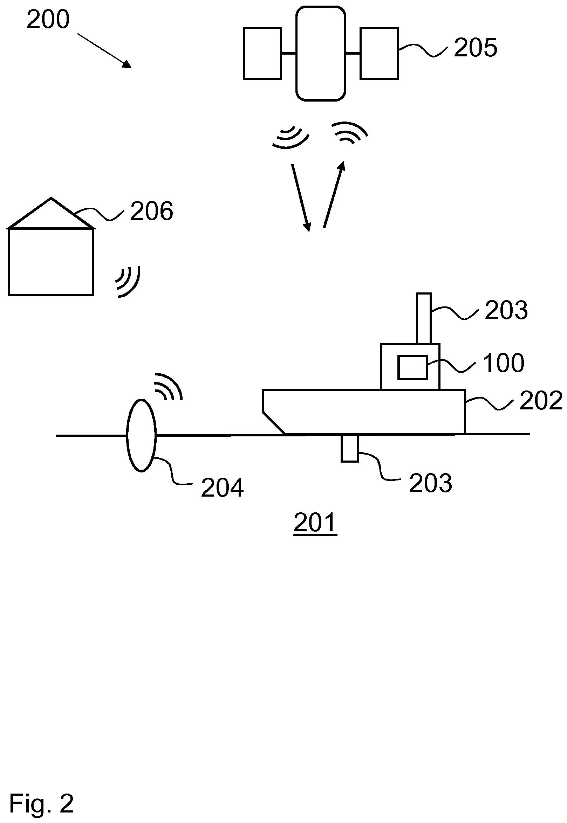

Fig. 2 shows a schematic arrangement 200. The arrangement 200 comprises an ocean 201. On the ocean 201 a vessel 202 is allocated. The vessel 202 comprises sensors 203. On the ocean 201 is also an in-situ sensor 204, in particular a buoy, a glider, external ships, etc. The sensor 204 is a measuring sensor for measuring ocean parameters, in particular a water temperature and salinity, ocean currents, wave parameters, wind parameters, sea ice thickness, sea ice concentration. In another embodiment the arrangement comprises further sensors like ocean drifters or coastal measurement stations. The sensors 203, 204 are in particular configured to measure water parameters like an ocean current speed or an ocean current direction or an absolute wave height or a significant wave height or a wave direction or a wave period or a wind speed or a wind direction or a wave spectrum comprising wind-generated waves and/or swell waves, sea ice concentration, sea ice drift, sea ice edge, sea surface temperature, sea surface salinity. The sensors 203 and 204 are in-situ sensors. The sensors 203 and/or 204 measure the parameters directly.

The arrangement 200 shows a satellite 205. The satellite 205 is configured to measure weather parameters remotely. For example, the satellite 205 measures weather parameters by sending out electromagnetic wave signals and evaluating a reflection of these radio signals. Such a measurement is a remote measurement.

The arrangement 200 shows a coastal station 206. The coastal station 206 is located on shore. The coastal station 206 also measures weather parameters related to maritime weather. The coastal station 206 on shore measures also remote weather parameters related to maritime weather.

The weather parameters that are captured in the described way and other weather parameters are the basis for weather forecast models.

State of the art weather forecast models calculate on a basis of measured weather data forecasts for maritime weather. These forecasts may be local or use only specific weather data, for example only weather data from satellites or only weather data from a coastal station 206. These weather forecast models, i.e. a first weather forecast model and a second weather forecast model, provide a first forecast parameter and a second forecast parameter. The second forecast parameter is provided for a second forecast model that is different from a first weather forecast model. Therefore, it can be assumed that the second forecast parameter differs from the first forecast parameter.

On the vessel 202 is arranged the apparatus 100. The apparatus 100 is configured to receive measured weather data from the memory 103.

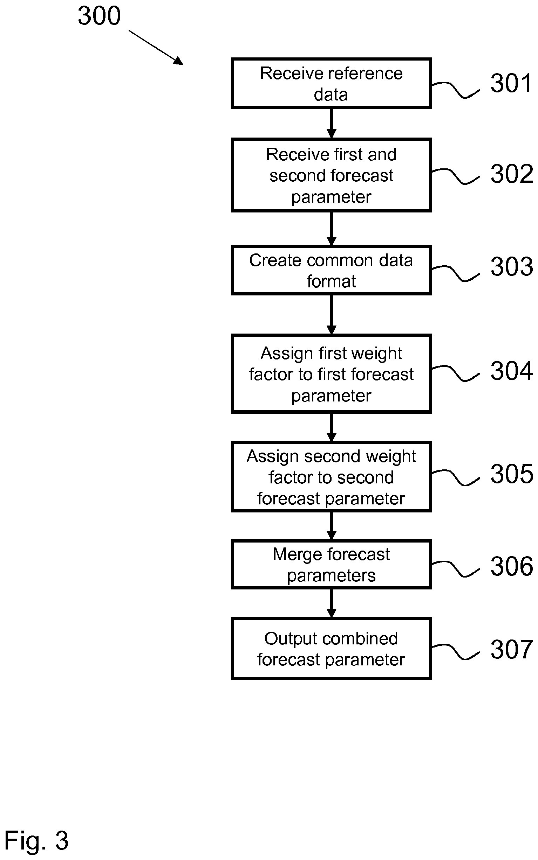

Fig. 3 shows a schematic flow diagram 300 of a method according to an embodiment of the invention.

In step 301, the interface receives measured reference data related to the first forecast parameter and/or the second forecast parameter.

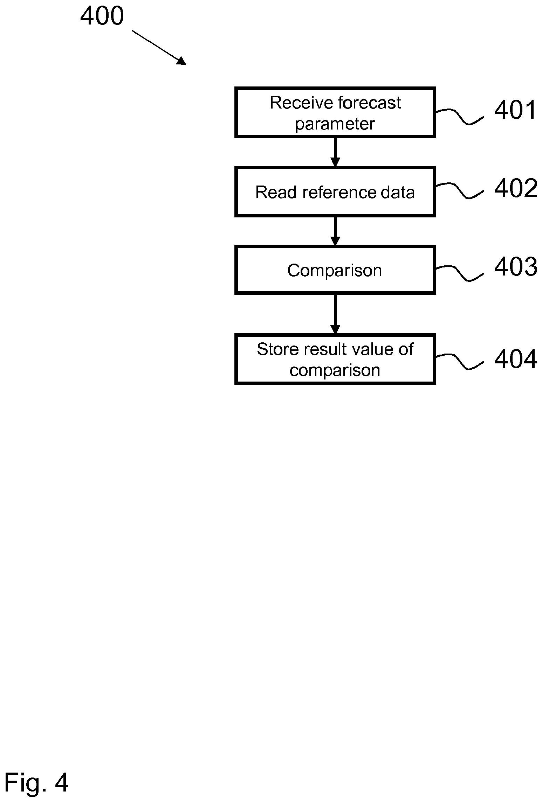

The received reference data is reference data to the received forecast parameters. The reference data is stored in the memory 103 by the processor 101 in a former or later reference data creation phase. The reference data creation phase is described according to Fig. 4 below.

In a step 302, the interface 102 of the apparatus 100 receives first forecast parameters of the first weather forecast model. The interface 102 also receives second forecast parameters of the second weather forecast model that is different from the first weather forecast model.

For receiving the forecast parameters according to step 302, the interface 102 is in communication with a memory 103 and/or a computer system of a weather forecast provider.

The first forecast parameter and the second forecast parameter comprise each a plurality or a single value of weather data. For example, a first forecast parameter comprises a wind speed and an ocean current speed and the second forecast parameter comprises the ocean current speed and ocean current direction and water temperature and wave height. The forecast parameter and the second forecast parameter are weather parameter vectors.

In another embodiment the steps 301 and 302 are performed in reverse order, so that the first forecast parameters and the second forecast parameters are received before the reference data.

In step 303 the processor 101 brings the first forecast parameter and the second forecast parameter and the reference data into a common data format, in particular the processor 101 assigns values of the first forecast parameter and the second forecast parameter and the reference data to a predetermined format, for example an array or a data vector or a data matrix. This format is the stored in the memory 103 in a predetermined way. In another embodiment the step 303 is optional.

In step 304, the process 101 assigns a first weight factor to the first forecast parameter. For evaluating the first forecast parameter, the processor 101 compares the first forecast parameter with respective reference data in the memory 103. A result of this comparison is a difference value that indicates an error of the first weather forecast parameter. According to a predetermined rule, the processor 101 assigns the first weight factor to the first forecast parameter. For example, if the difference between the first forecast parameter and the measured reference data is very low, the weight factor is high. On the other hand, if the difference between the first forecast parameter and the reference data is high, the weight factor is low. The predetermined value can be adapted by the processor 101 according to a machine learning process as described above.

The processor 101 assigns a second weight factor to the second forecast parameter respectively in step 305.

In step 306, the processor 101 combines the first forecast parameter and the second forecast parameter. The combination of the forecast parameters is based on the weight factors. In the described embodiment, the first forecast parameter is of good quality and has a low difference to the reference data value and therefore a high weight factor.

In this embodiment, the second forecast parameter has a low quality and therefore a difference between the second forecast parameter and the measured reference data that is bigger than a predetermined value and therefore the processor 101 assigned a low second weight factor. Of course, the quality of the first forecast parameter and the second forecast parameter can differ in other embodiments.

The combination of the first forecast parameter and the second forecast parameter in step 306 is a merging of the first weather forecast model and the second forecast model. The first weight factor and the second weight factor define the importance of the first weight forecast parameter and the second weight forecast parameter.

The combined forecast parameter is a combination of the values of the first forecast parameter and the second forecast parameter. In particular, the combined forecast parameter is the statistical value of the first forecast parameter and the second forecast parameter. This statistical value is based on the weighted first forecast parameter and the weighted second forecast parameter. Therefore, as in the described embodiment, the first forecast parameter is taken more into account than the second forecast parameter. For example, the value of the second forecast parameter is only a third of the combined forecast parameter and the first forecast parameter is two thirds of the combined forecast parameter.

If the weight factor of one of the forecast parameters is under a predetermined value, the whole forecast parameter is waived. In this case, the processor 101 combines only the first forecast parameter or the second forecast parameter to the combined forecast parameter. The other forecast parameter that has the weight factor under the predetermined threshold is not taken into account.

The determination of the combined forecast parameter is dependent on the weight factors and may be performed by machine learning, in particular unsupervised machine learning in which the processor 101 compares model data and measured reference data with historical data repetitively and therefore determines values during several repetitions that lead to a decreasing forecast error. In this unsupervised machine learning process all available sources are used to provide an optimal combined forecast parameter. This may comprise high-intensity computing intervals for the processor 101.

In another kind of machine learning, in particular supervised machine learning, boundary conditions, geophysical relations and constraints may be given to the processor 101 to decrease the computing intensity and/or to improve the outcome. In particular, those kind of parameters are given to the processor 101 that have a low variation, for example ocean current directions that are not changing noticeably in a space of several kilometers. This kind of machine learning determining the combined forecast parameter is faster and requires less intensive computing.

In step 307, the interface 102 outputs the combined forecast parameter as a weather forecast. The combined forecast parameter has a less total forecast uncertainty compared to the first forecast parameter alone and/or the second forecast parameter alone.

The processor 101 repeats the combining of the combined forecast parameter in predefined intervals. In the described embodiment the time interval one hour. In other embodiments the time interval has another value, for example a half-day, day, week or 10 days or 14 days.

Using real-time observational data can also provide additional ocean and weather information for a specific vessel location or on a specific vessel route. This real-time observational data is measured in-situ and provided to the apparatus 100. Real-time in this context means that the time difference between measuring time and data receiving time is so small that the observed weather parameters (e.g. wind speed, wave height, ocean current) have not changed noticeably. For wind real-time may be about 1 hour, for an ocean current real time may be several hours.

Fig. 4 shows a schematic flowchart diagram 400 of a method for generating weight factors according to an embodiment of the invention. In a first step 401, the processor 100 receives a first forecast parameter. Receiving the first forecast parameter may be performed in the above-described manner.

In step 402, the processor 101 reads reference data from memory 103.

In step 403, the processor 103 compares the received first forecast parameter and the read reference data. The difference between these parameters indicates the quality of the received first forecast parameter.

Performing these steps 401, 402, 403 for a plurality of times, a database in the memory 103 is generated. Results of the comparisons of step 403 are also stored in the memory 103. By evaluating these stored comparison parameters, the processor 101 can define weight factors. In particular, the processor 101 defines the first weight factor and the second weight factor. According to the described embodiment, the processor 101 defines the first weight factor as a high-weight factor, if the first forecast parameter differs from the reference data for not more than a predetermined threshold value. The predetermined threshold value is also defined by the processor 101 and may be adapted by the processor 101. Therefore the predetermined threshold value is based on unsupervised or supervised machine learning and is automatically adapting to increase the accuracy of the method.

The reference data comprises, with increasing accuracy, data from local/in-situ measurements, for example on board of a vessel, remote sensing data, for example from satellites, and forecast models, for example from a weather prediction provider. The processor 101 is configured to process these data dependent of their level of accuracy. By determining and assigning the weight factors and combining the data from the different sources, the accuracy of the combined forecast parameter can be improved in view of only using data with lower accuracy.

### List of reference signs

- 100: apparatus
- 101: processor
- 102: interface
- 103: memory
- 200: arrangement
- 201: ocean
- 202: vessel
- 203: sensors
- 204: in-situ sensor
- 205: satellite
- 206: coastal station
- 300, 400: flow chart diagram
- 301 to 306: step
- 401 to 405: step

## Claims

1. An apparatus (100) for providing a weather forecast, comprising
an interface (102) that is configured
to receive a first forecast parameter of a first weather forecast model;
to receive a second forecast parameter of a second weather forecast model different from the first weather forecast model; and
to receive measured reference data related to the first forecast parameter and the second forecast parameter;
a processor (101) that is configured
to assign a first weight factor to the first forecast parameter based on a comparison of the first forecast parameter with the measured reference data;
to assign a second weight factor to the second forecast parameter based on a comparison of the second forecast parameter with the measured reference data;
to combine the first forecast parameter and the second forecast parameter based on the first weight factor and the second weight factor to obtain a combined forecast parameter; and
wherein the interface (102) is configured to output the combined forecast parameter as a weather forecast.

2. The apparatus (100) according to claim 1, wherein the processor (101) is configured to assign the weight factors on the basis of a skill score indicating the quality of the first forecast parameter and/or the second forecast parameter and/or the measured reference data.

3. The apparatus (100) according to one of the previous claims, wherein the processor (101) is configured to assign the weight factors on the basis of an error estimate indicating the mismatch between a measured weather parameter and the first forecast parameter or the second forecast parameter, respectively.

4. The apparatus (100) according to claim 3, wherein the processor (101) is configured to determine the mismatch on the basis of at least one of the following parameters: an ocean current speed, an ocean current direction, an absolute wave height, a significant wave height, a wave direction, a wave period, a wind speed, a wind direction, a wave spectrum comprising wind-generated waves and/or swell waves, sea ice concentration, sea ice drift, sea ice edge, sea surface temperature, sea surface salinity.

5. The apparatus (100) according to one of the previous claims, wherein the processor (101) is configured to obtain the combined forecast parameter in predetermined time intervals, in particular after receiving new first forecast parameters and/or new second forecast parameters and/or new measured reference data; and/or
wherein the processor (101) is configured to determine the first weight factor and/or the second weight factor in predetermined time intervals.

6. The apparatus (100) according to one of the previous claims, wherein the processor (101) is configured to adapt the received first forecast parameter and/or the received second forecast parameter and/or the received measured reference data to a common data format, in particular relating recording time, recording location, file format and/or naming.

7. The apparatus (100) according to one of the previous claims, wherein the processor (101) is configured to obtain the combined forecast parameter by creating statistical value based on the weighted first forecast parameter and the weighted second forecast parameter, in particular first order statistics value or second order statistics value.

8. The apparatus (100) according to one of the previous claims, wherein the processor (101) is configured to determine the weight factors dependent of a capturing method hierarchically, in particular dependent of in-situ observation of weather parameters and remote sensing weather parameters, wherein the processor (101) is configured to prioritize the in-situ observation parameters over the remote sensing weather parameters; or
in particular dependent of in-situ observation of weather parameters and weather forecast parameters, wherein the processor (101) is configured to prioritize the in-situ observation parameters over the weather forecast parameters; or
in particular dependent of remote sensing weather parameters and weather forecast parameters, wherein the processor (101) is configured to prioritize the remote sensing parameters over the weather forecast parameters.

9. The apparatus (100) according to one of the previous claims, wherein the reference data comprises observational data, in particular satellite data and/or airborne data and/or in-situ data from coastal stations and/or in-situ data from buoys and/or in-situ data from gliders and/or in-situ data from external ships; and/or
wherein the first weather forecast model and the second weather forecast model are based on model data, the model data comprising in particular climatology data and/or seasonal forecast data and/or long term forecast data and/or short term forecast data.

10. The apparatus (100) according to one of the previous claims, wherein the processor (101) is configured to waive the first forecast parameter or the second forecast parameter if the weight factor between the two parameters differs for more than a predetermined value, wherein the forecast parameter with the lower weight factor is waived.

11. The apparatus (100) according to claim 10, wherein the predetermined value is based on machine learning and wherein the processor (101) is configured to determine the predetermined value by iterative execution of the comparison of the first forecast parameter with the measured reference data and/or by iterative execution of the comparison of the second forecast parameter with the measured reference data.

12. The apparatus (100) according to one of the previous claims, wherein the processor (101) is configured to weight the forecast parameters in a way that the lowest mismatch between the combined forecast parameter and the reference data is given.

13. The apparatus (100) according to one of the previous claims, wherein the processor (101) is configured to select the latest weather parameter from the reference data or to select the weather parameter from the reference data that was measured in a closest distance and/or time to a vessel that utilizes the combined forecast parameter.

14. A method for providing a weather forecast, comprising
providing a first forecast parameter of a first weather forecast model;
providing a second forecast parameter of a second weather forecast model different from the first weather forecast model; and
providing measured reference data related to the first forecast parameter and the second forecast parameter;
assigning a first weight factor to the first forecast parameter based on a comparison of the first forecast parameter with the measured reference data;
assigning a second weight factor to the second forecast parameter based on a comparison of the second forecast parameter with the measured reference data;
combining the first forecast parameter and the second forecast parameter based on the first weight factor and the second weight factor to obtain a combined forecast parameter; and
outputting the combined forecast parameter as a weather forecast.

15. Computer program product with program code to execute the method according to claim 14, when the program code is being executed on a computer system.

## Patentansprüche

1. Vorrichtung (100) zum Bereitstellen einer Wettervorhersage, umfassend
eine Schnittstelle (102), die eingerichtet ist
einen ersten Vorhersageparameter eines ersten Wettervorhersagemodells zu empfangen;
eine zweiten Vorhersageparameter eines zweiten Wettervorhersagemodells zu empfangen, das sich vom ersten Wettervorhersagemodell unterscheidet; und
gemessene Referenzdaten betreffend den ersten Vorhersageparameter und den zweiten Vorhersageparameter zu empfangen;
einen Prozessor (101), der eingerichtet ist
einen ersten Gewichtungsfaktor dem ersten Vorhersageparameter basierend auf einem Vergleich des ersten Vorhersageparameters mit den gemessenen Referenzdaten zuzuweisen;
einen zweiten Gewichtungsfaktor dem zweiten Vorhersageparameter basierend auf einem Vergleich des zweiten Vorhersageparameters mit den gemessenen Referenzdaten zuzuweisen;
den ersten Vorhersageparameter und den zweiten Vorhersageparameter basierend auf dem ersten Gewichtungsfaktor und dem zweiten Gewichtungsfaktor zu kombinieren, um einen kombinierten Vorhersageparameter zu erhalten; und
wobei die Schnittstelle (102) eingerichtet ist, den kombinierten Vorhersageparameter als eine Wettervorhersage auszugeben.

2. Vorrichtung (100) nach Anspruch 1, wobei der Prozessor (101) eingerichtet ist, die Gewichtungsfaktoren auf Basis einer Fähigkeitsbewertung zuzuweisen, die die Qualität des ersten Vorhersageparameters und/oder des zweiten Vorhersageparameters und/oder der angemessenen Referenzdaten anzeigt.

3. Vorrichtung (100) nach einem der vorhergehenden Ansprüche, wobei der Prozessor (101) eingerichtet ist, die Gewichtungsfaktoren auf Basis einer Fehlerschätzung zuzuweisen, die die fehlende Übereinstimmung zwischen einem gemessenen Wetterparameter und dem ersten Vorhersageparameter bzw. dem zweiten Vorhersageparameter anzeigt.

4. Vorrichtung (100) nach Anspruch 3, wobei der Prozessor (101) eingerichtet ist, die fehlende Übereinstimmung auf Basis von mindestens einem der folgenden Parameter zu bestimmen: einer Ozeanströmungsgeschwindigkeit, einer Ozeanströmungsrichtung, einer absoluten Wellenhöhe, einer wesentlichen Wellenhöhe, einer Wellenrichtung, einer Wellenperiode, einer Windgeschwindigkeit, einer Windrichtung, eines Wellenspektrums, das von Wind erzeugte Wellen und/oder Wellengang umfasst, Meereseiskonzentration, Meereseisdrift, Meereseisrand, Meeresoberflächentemperatur, Meeresoberflächensalzgehalt.

5. Vorrichtung (100) nach einem der vorhergehenden Ansprüche, wobei der Prozessor (101) eingerichtet ist, den kombinierten Vorhersageparameter in vorbestimmten Zeitintervallen zu erhalten, insbesondere nach Empfangen von neuen ersten Vorhersageparametern und/oder neuen zweiten Vorhersageparametern und/oder neuen gemessenen Referenzdaten; und/oder wobei der Prozessor (101) dazu ausgelegt ist, den ersten Gewichtungsfaktor und/oder den zweiten Gewichtungsfaktor in vorbestimmten Zeitintervallen zu bestimmen.

6. Vorrichtung (100) nach einem der vorhergehenden Ansprüche, wobei der Prozessor (101) eingerichtet ist, den empfangenen ersten Vorhersageparameter und/oder den empfangenen zweiten Vorhersageparameter und/oder die empfangenen gemessenen Referenzdaten an ein gemeinsames Datenformat, insbesondere mit Bezug auf eine Aufzeichnungszeit, einen Aufzeichnungsort, ein Dateiformat und/oder eine Dateibenennung, anzupassen.

7. Vorrichtung (100) nach einem der vorhergehenden Ansprüche, wobei der Prozessor (101) eingerichtet ist, den kombinierten Vorhersageparameter durch Erstellen eines statistischen Wertes auf Basis des gewichteten ersten Vorhersageparameters und des gewichteten zweiten Vorhersageparameters, insbesondere eines statistischen Wertes erster Ordnung oder eines statistischen Wertes zweiter Ordnung, zu erhalten.

8. Vorrichtung (100) nach einem der vorhergehenden Ansprüche, wobei der Prozessor (101) eingerichtet ist, die Gewichtungsfaktoren in Abhängigkeit von einem Erfassungsverfahren hierarchisch zu bestimmen, insbesondere in Abhängigkeit von einer In-situ-Beobachtung von Wetterparametern und Fernabtastungswetterparametern, wobei der Prozessor (101) eingerichtet ist, die In-situ-Beobachtungsparameter gegenüber den Fernabtastungswetterparametern zu priorisieren; oder insbesondere in Abhängigkeit von einer In-situ-Beobachtung von Wetterparametern und Wettervorhersageparametern, wobei der Prozessor (101) eingerichtet ist, die In-situ-Beobachtungsparameter gegenüber den Wettervorhersageparametern zu priorisieren; oder
insbesondere in Abhängigkeit von Fernabtastungswetterparametern und Wettervorhersageparametern, wobei der Prozessor (101) eingerichtet ist, die Fernabtastungsparameter gegenüber den Wettervorhersageparametern zu priorisieren.

9. Vorrichtung (100) nach einem der vorhergehenden Ansprüche, wobei die Referenzdaten Beobachtungsdaten umfassen, insbesondere Satellitendaten und/oder luftgestützte Daten und/oder In-situ-Daten von Küstenstationen und/oder In-situ-Daten von Bojen und/oder In-situ-Daten von Gleitern und/oder In-situ-Daten von externen Schiffen; und/oder
wobei das erste Wettervorhersagemodell und das zweite Wettervorhersagemodell auf Modelldaten basieren, wobei die Modelldaten insbesondere Klimatologiedaten und/oder Saisonvorhersagedaten und/oder Langzeitvorhersagedaten und/oder Kurzzeitvorhersagedaten umfassen.

10. Vorrichtung (100) nach einem der vorhergehenden Ansprüche, wobei der Prozessor (101) eingerichtet ist, den ersten Vorhersageparameter oder den zweiten Vorhersageparameter außer Acht zu lassen, wenn sich der Gewichtungsfaktor zwischen den zwei Parametern um mehr als einen vorbestimmten Wert unterscheidet, wobei der Vorhersageparameter mit dem niedrigsten Gewichtungsfaktor außer Acht gelassen wird.

11. Vorrichtung (100) nach Anspruch 10, wobei der vorbestimmte Wert auf Maschinenlernen basiert und wobei der Prozessor (101) eingerichtet ist, den vorbestimmten Wert durch iteratives Ausführen des Vergleichs des ersten Vorhersageparameters mit den gemessenen Referenzdaten und/oder durch iteratives Ausführen des Vergleichs des zweiten Vorhersageparameters mit den gemessenen Referenzdaten zu bestimmen.

12. Vorrichtung (100) nach einem der vorhergehenden Ansprüche, wobei der Prozessor (101) eingerichtet ist, die Vorhersageparameter derart zu gewichten, dass die niedrigste fehlende Übereinstimmung zwischen dem kombinierten Vorhersageparameter und den Referenzdaten gegeben ist.

13. Vorrichtung (100) nach einem der vorhergehenden Ansprüche, wobei der Prozessor (101) eingerichtet ist, den neuesten Wetterparameter aus den Referenzdaten auszuwählen oder den Wetterparameter aus den Referenzdaten auszuwählen, der in einem geringsten Abstand und/oder einer geringsten Zeit zu einem Fahrzeug, das den kombinierten Vorhersageparameter verwendet, gemessen wurde.

14. Verfahren zum Bereitstellen einer Wettervorhersage, umfassend
Bereitstellen eines ersten Vorhersageparameters eines ersten Wettervorhersagemodells;
Bereitstellen eines zweiten Vorhersageparameters eines zweiten Wettervorhersagemodells, das sich vom ersten Wettervorhersagemodell unterscheidet; und
Bereitstellen von gemessenen Referenzdaten, die den ersten Vorhersageparameter und den zweiten Vorhersageparameter betreffen;
Zuweisen eines ersten Gewichtungsfaktors zum ersten Vorhersageparameter basierend auf einem Vergleich des ersten Vorhersageparameters mit den gemessenen Referenzdaten;
Zuweisen eines zweiten Gewichtungsfaktors zum zweiten Vorhersageparameter basierend auf einem Vergleich des zweiten Vorhersageparameters mit den gemessenen Referenzdaten;
Kombinieren des ersten Vorhersageparameters und des zweiten Vorhersageparameters basierend auf dem ersten Gewichtungsfaktor und dem zweiten Gewichtungsfaktor, um einen kombinierten Vorhersageparameter zu erhalten; und Ausgeben des kombinierten Vorhersageparameters als eine Wettervorhersage.

15. Computerprogrammprodukt mit einem Programmcode zum Ausführen des Verfahrens nach Anspruch 14, wenn der Programmcode auf einem Computersystem ausgeführt wird.

## Revendications

1. Appareil (100) permettant de fournir une prévision météorologique, comprenant :
une interface (102) configurée pour
recevoir un premier paramètre de prévision d'un premier modèle de prévision météorologique ;
recevoir un deuxième paramètre de prévision d'un deuxième modèle de prévision météorologique différent du premier modèle de prévision météorologique ; et
recevoir des données de référence mesurées liées au premier paramètre de prévision et au deuxième paramètre de prévision ;
un processeur (101) configuré pour
assigner un premier facteur de pondération au premier paramètre de prévision sur la base d'une comparaison du premier paramètre de prévision aux données de référence mesurées ;
assigner un deuxième facteur de pondération au deuxième paramètre de prévision sur la base d'une comparaison du deuxième paramètre de prévision aux données de référence mesurées ;
combiner le premier paramètre de prévision et le deuxième paramètre de prévision sur la base du premier facteur de pondération et du deuxième facteur de pondération dans le but d'obtenir un paramètre de prévision combiné ; et
l'interface (102) étant configurée pour délivrer en sortie le paramètre de prévision combiné sous forme d'une prévision météorologique.

2. Appareil (100) selon la revendication 1, dans lequel le processeur (101) est configuré pour assigner les facteurs de pondération sur la base d'un indice de vérification indiquant la qualité du premier paramètre de prévision et/ou du deuxième paramètre de prévision et/ou des données de référence mesurées.

3. Appareil (100) selon l'une des revendications précédentes, dans lequel le processeur (101) est configuré pour assigner les facteurs de pondération sur la base d'une estimation d'erreur indiquant la discordance entre un paramètre météorologique mesuré et, respectivement, le premier paramètre de prévision ou le deuxième paramètre de prévision.

4. Appareil (100) selon la revendication 3, dans lequel le processeur (101) est configuré pour déterminer la discordance sur la base d'au moins un des paramètres suivants : une vitesse d'un courant océanique, une direction d'un courant océanique, une hauteur absolue des vagues, une hauteur significative des vagues, une direction des vagues, une période des vagues, une vitesse du vent, une direction du vent, un spectre des vagues comprenant des vagues dues au vent et/ou des vagues de houle, une concentration de glace de mer, une dérive de glace de mer, une bordure de glace de mer, une température de surface de la mer, une salinité de surface de la mer.

5. Appareil (100) selon l'une des revendications précédentes, dans lequel le processeur (101) est configuré pour obtenir le paramètre de prévision combiné dans des intervalles de temps prédéterminés, plus particulièrement après avoir reçu des nouveaux premiers paramètres de prévision et/ou de nouveaux deuxièmes paramètres de prévision et/ou de nouvelles données de référence mesurées ; et/ou
dans lequel le processeur (101) est configuré pour déterminer le premier facteur de pondération et/ou le deuxième facteur de pondération dans des intervalles de temps prédéterminés.

6. Appareil (100) selon l'une des revendications précédentes, dans lequel le processeur (101) est configuré pour adapter le premier paramètre de prévision reçu et/ou le deuxième paramètre de prévision reçu et/ou les données de référence mesurées reçues à un format de données commun, plus particulièrement concernant une heure d'enregistrement, un lieu d'enregistrement, un format de fichier et/ou un nommage.

7. Appareil (100) selon l'une des revendications précédentes, dans lequel le processeur (101) est configuré pour obtenir le paramètre de prévision combiné en créant une valeur statistique sur la base du premier paramètre de prévision pondéré et du deuxième paramètre de prévision pondéré, plus particulièrement une valeur de statistique du premier ordre ou une valeur de statistique du second ordre.

8. Appareil (100) selon l'une des revendications précédentes, dans lequel le processeur (101) est configuré pour déterminer les facteurs de pondération en fonction d'un procédé de capture de façon hiérarchique, plus particulièrement en fonction de paramètres d'observation météorologique in situ et de paramètres de télédétection météorologique, le processeur (101) étant configuré pour accorder une priorité aux paramètres d'observation in situ sur les paramètres de télédétection météorologique ; ou
plus particulièrement en fonction de paramètres d'observation météorologique in situ et de paramètres de prévision météorologique, le processeur (101) étant configuré pour accorder une priorité aux paramètres d'observation in situ sur les paramètres de prévision météorologique ; ou
plus particulièrement en fonction de paramètres de télédétection météorologique et de paramètres de prévision météorologique, le processeur (101) étant configuré pour accorder une priorité aux paramètres de télédétection sur les paramètres de prévision météorologique.

9. Appareil (100) selon l'une des revendications précédentes, dans lequel les données de référence comprennent des données d'observation, plus particulièrement des données satellites et/ou des données aéroportées et/ou des données in situ issues de stations côtières et/ou des données in situ issues de bouées et/ou de données in situ issues de planeurs et/ou des données in situ issues de navires externes ; et/ou
dans lequel le premier modèle de prévision météorologique et le deuxième modèle de prévision météorologique sont basés sur des données de modèle, les données de modèle comprenant plus particulièrement des données de climatologie et/ou des données de prévision saisonnière et/ou des données de prévision à long terme et/ou des données de prévision à court terme.

10. Appareil (100) selon l'une des revendications précédentes, dans lequel le processeur (101) est configuré pour écarter le premier paramètre de prévision ou le deuxième paramètre de prévision si la facteur de pondération entre les deux paramètres diffère de plus d'une valeur prédéterminée, le paramètre de prévision dont le facteur de pondération est le plus faible étant écarté.

11. Appareil (100) selon la revendication 10, dans lequel la valeur prédéterminée est basée sur un apprentissage machine, et dans lequel le processeur (101) est configuré pour déterminer la valeur prédéterminée par exécution itérative de la comparaison du premier paramètre de prévision aux données de référence mesurées et/ou par exécution itérative de la comparaison du deuxième paramètre de prévision aux données de référence mesurées.

12. Appareil (100) selon l'une des revendications précédentes, dans lequel le processeur (101) est configuré pour pondérer les paramètres de prévision de manière à produire la plus faible discordance entre le paramètre de prévision combiné et les données de référence.

13. Appareil (100) selon l'une des revendications précédentes, dans lequel le processeur (101) est configuré pour sélectionner le plus récent paramètre météorologique parmi les données de référence ou pour sélectionner parmi les données de référence le paramètre météorologique qui a été mesuré à une distance et/ou heure la plus proche d'un bâtiment qui utilise le paramètre de prévision combiné.

14. Procédé de fourniture d'une prévision météorologique, comprenant :
la fourniture d'un premier paramètre de prévision d'un premier modèle de prévision météorologique ;
la fourniture d'un deuxième paramètre de prévision d'un deuxième modèle de prévision météorologique différent du premier modèle de prévision météorologique ; et
la fourniture de données de référence mesurées liées au premier paramètre de prévision et au deuxième paramètre de prévision ;
l'assignation d'un premier facteur de pondération au premier paramètre de prévision sur la base d'une comparaison du premier paramètre de prévision aux données de référence mesurées ;
l'assignation d'un deuxième facteur de pondération au deuxième paramètre de prévision sur la base d'une comparaison du deuxième paramètre de prévision aux données de référence mesurées ;
la combinaison du premier paramètre de prévision et du deuxième paramètre de prévision sur la base du premier facteur de pondération et du deuxième facteur de pondération dans le but d'obtenir un paramètre de prévision combiné ; et
la délivrance en sortie du paramètre de prévision combiné sous forme d'une prévision météorologique.

15. Produit-programme d'ordinateur comportant un code de programme pour exécuter le procédé selon la revendication 14 lorsque le code de programme est exécuté sur un système ordinateur.
